# EUROPÄISCHE PATENTSCHRIFT

(11) **EP 1 584 722 B1**
(45) Veröffentlichungstag und Bekanntmachung des Hinweises auf die Patenterteilung: **18.04.2007**
(21) Anmeldenummer: 04008294.3
(22) Anmeldetag: 06.04.2004
(51) Int. Cl.: D04B 35/04

(54) **Zungennadel für maschenbildende Textilmaschine**
Latch needle for stitch forming textile machine
Aiguille à clapet pour une machine textile formant des mailles

(43) Veröffentlichungstag der Anmeldung: 12.10.2005
(73) Patentinhaber: Groz-Beckert KG, 72458 Albstadt (DE)
(72) Erfinder: Sauter, Manfred, 72510 Stetten a.k.M.-Storzingen (DE)
(74) Vertreter: Rüger, Barthelt & Abel Patentanwälte

(56) Entgegenhaltungen:
- DE-A- 2 225 835
- DE-A- 3 331 031

## Beschreibung

Die Erfindung betrifft eine Zungennadel für eine maschenbildende Textilmaschine, insbesondere für eine Strickmaschine.

In Strickmaschinen oder auch in anderen maschenbildenden Maschinen werden häufig so genannte Zungennadeln eingesetzt, die zur Maschenbildung in schneller Folge hin und her bewegt werden. Die an den Nadeln vorgesehenen und schwenkbar gelagerten Zungen öffnen und schließen dabei in rascher Folge. Dabei schlagen sie abwechselnd an dem Haken der Zungennadel und an dem Schaft derselben an. Aufgrund der hohen Beschleunigungen, denen die Zungennadeln und somit die Zungen ausgesetzt sind, können Zungenschaftbrüche entstehen. In der Vergangenheit wurde mit unterschiedlichen Maßnahmen versucht, die Zahl der Zungenschaftbrüche zu reduzieren. Beispielsweise schlägt die EP 0 291 687 eine Zunge aus faserverstärktem thermoplastischen Kunststoff vor. Allerdings hat sich dieser Gedanke in der Praxis nicht durchgesetzt.

Aus der DE-PS 27 14 607 ist es bekannt, den Aufschlag der Nadelzunge in der Rücklage durch eine besondere Gestaltung des Nadellängsschlitzes zu dämpfen und dadurch in der Rücklage der Nadelzunge auftretende Beschädigungen an der Nadelzunge und der Nadel selbst zu vermeiden. Dazu weist der Zungenrücken keilförmig zusammenlaufende Flanken auf, die den Nadellängsschlitz etwas aufspreizen können. Der elastischen Aufspreizung der Nadelschaftwangen sind aber enge Grenzen gesetzt.

Weiter ist es aus der US-PS 2 596 311 bekannt, Maßnahmen zur Herabsetzung der im Bereich der Nadelzunge auftretenden Massenträgheitskräfte zu treffen, indem durchgehende Ausnehmungen oder Bereiche verminderter Wandstärke vorgesehen werden. Die genannte Druckschrift betrifft Repassiernadeln zur Reparatur von Strümpfen oder anderen Strickwaren. Die Nadelzunge trägt an ihrem mit dem Nadelhaken zusammenwirkende Ende einen angeformten Fortsatz, der die eigentliche Zungenlänge um ein mehrfaches übertrifft. Zur Verringerung seines Gewichts ist er mit durchgehenden Ausnehmungen in Gestalt von kreisrunden Löchern versehen oder insgesamt mit gegenüber der eigentlichen Nadelzunge verminderter Wandstärke ausgebildet. Die Nadelzunge selbst ist aber bei diesen Repassiernadeln, die mit normalen Nadelzungen nicht zu vergleichen sind, massiv, wobei auf einen Löffel verzichtet ist.

Die DE 33 31 031 A1 offenbart eine Zungennadel mit einer Zunge, deren Schaft in dem Bereich zwischen seiner Lagerstelle und dem schwenkbaren Löffel mit ein oder mehreren Ausnehmungen, beispielsweise in Form von Durchgangsbohrungen versehen ist. Diese Aussparungen führen jedoch zu einer erheblichen Schwächung des Schafts was zu Zungenschaftbrüchen führen kann.

Einen anderen Ansatz zur Vermeidung von Zungenschaftbrüchen bietet die DE-OS 2 225 835 an. Danach wird vorgeschlagen, den Zungenschaft mit Verstärkungsrippen zu versehen, die eine Versteifung des Zungenschafts bewirken sollen. Die Versteifungsrippen führen nicht unmittelbar zu einer Verminderung der Zungenschaftbrüche.

Davon ausgehend ist es Aufgabe der Erfindung, eine Zungennadel für eine maschenbildende Textilmaschine anzugeben, wobei diese Zungennadel verminderte Neigung zu Zungenbrüchen zeigen soll.

Die erfindungsgemäße Zungennadel gemäß Anspruch 1 erfüllt diese Erwartungen. Sie weist an ihrer Zunge wenigstens eine oder auch mehrere Vertiefungen auf, die an ihrem von der Lagereinrichtung abliegenden Ende zusätzlich zu der ohnehin vorhandenen Formfläche vorhanden sind. Die Formfläche ist beispielsweise eine löffelartige Mulde zur Aufnahme der Hakenspitze (zungengezaschte Nadel). Die Formfläche kann auch ein rippenartiger oder geringfügig gewölbter Vorsprung sein, der in eine Ausnehmung des Hakens greift (hakengezaschte Nadel). In beiden Fällen ist die wenigstens eine erfindungsgemäße Vertiefung an dem freien Ende der Zunge, d.h. etwa in dem Bereich angeordnet, der mit dem Haken in Anlage kommt. Die Vertiefung reduziert das Gesamtgewicht einer Zunge um ein Geringes. Durch den großen Abstand der Vertiefung von der Schwenkachse hat diese Reduktion einen überproportionalen Einfluss auf das Massenträgheitsmoment der Zunge. Bereits eine kleine Gewichtsverringerung führt somit zu einer erheblichen Reduzierung des Massenträgheitsmoments. In Versuchen konnte das Massenträgheitsmoment je nach Ausführung der Vertiefung zwischen 5% und 10% gegenüber handelsüblichen Nadeln ohne Vertiefung reduziert werden. Dadurch kann der Verschleiß an der Hakenspitze, an der Formfläche der Zunge und gegebenenfalls auch an der Zungenlagerung verringert werden. Tests haben gezeigt, dass sich das Risiko des Zerstörens des Strickwerzeuges z.B. durch Backen-, Zungenloch-, Zungenkopf-und Zungenzaschbruch reduziert. Damit weisen die erfindungsgemäßen Zungennadeln bei gewöhnlichem Einsatz eine erhöhte Lebensdauer auf. Sie gestatten andererseits auch eine Erhöhung der Arbeitsgeschwindigkeit (Maschinendrehzahl). Die Vertiefungen sind beispielsweise an einer hakenabgewandten Seite der Zunge angeordnet. Sie unterscheiden sich insoweit von der dem Haken zugewandten Formfläche, die als Mulde oder als Vorsprung ausgebildet sein kann. Die Vertiefungen sind vorzugsweise als relativ flache Mulden ausgebildet, deren Flanken vorzugsweise im stumpfen Winkel voneinander weg laufen. Damit wird die Neigung von Ansammlungen von Ablagerungen in diesen Mulden vermieden.

Vorzugsweise sind an der Zunge zwei Ausnehmungen an den Seiten- und Rückenflächen ausgebildet. Werden die Mulden an den hakenabgewandten schräg angeordneten Seitenflächen der Zunge angeordnet, ungefähr auf der Höhe des Flächenschwerpunktes des Zungenkopfquerschnitts, wird zudem eine hohe Steifigkeit der Zunge erreicht.

Anstelle der Mulden können die Vertiefungen auch als Durchbrüche ausgebildet sein oder Durchbrüche enthalten. Dies kann zu einer weiteren Verminderung des Massenträgheitsmoments der Zunge ohne wesentliche Beeinträchtigung von deren Festigkeit oder Steifigkeit genutzt werden. Zudem haben solche Durchbrüche oder sonstigen Ausnehmungen kaum schädlichen Einfluss auf die Festigkeit der Zunge, wenn sie in dem Endbereich derselben angeordnet sind. Als Endbereich ist der Abschnitt der Zunge zu sehen, der mit dem Haken zusammenwirkt und mit diesem in Anlage kommt.

Weitere Einzelheiten vorteilhafter Ausführungsformen der Erfindung ergeben sich aus der Zeichnung, der Beschreibung oder Ansprüchen.

In der Zeichnung sind Ausführungsbeispiele der Erfindung veranschaulicht. Es zeigen:
- Figur 1: eine zungengezaschte Nadel mit verbesserter Zunge in schematisierter ausschnittsweiser Seitenansicht und Zunge in Rückenlage,
- Figur 2: die Zungennadel nach Figur 1 in einer schematisierten Seitenansicht mit Zunge in Schließlage und in einem anderen Maßstab,
- Figur 3: die Zunge der Zungennadel nach Figur 1 und 2 in einer Seitenansicht,
- Figur 4: die Zunge nach Figur 3, geschnitten entlang der Linie VI-VI,
- Figur 5: eine hakengezaschte Zungennadel in ausschnittsweiser Seitenansicht,
- Figur 6: die Zunge der hakengezaschten Zungennadel nach Figur 5 in einer ausschnittsweisen Seitenansicht in einem anderen Maßstab,
- Figur 7: die Zunge nach Figur 6 in einer ausschnittsweisen Draufsicht und
- Figur 8: die Zunge nach Figur 6, geschnitten entlang der Linie VIII-VIII.

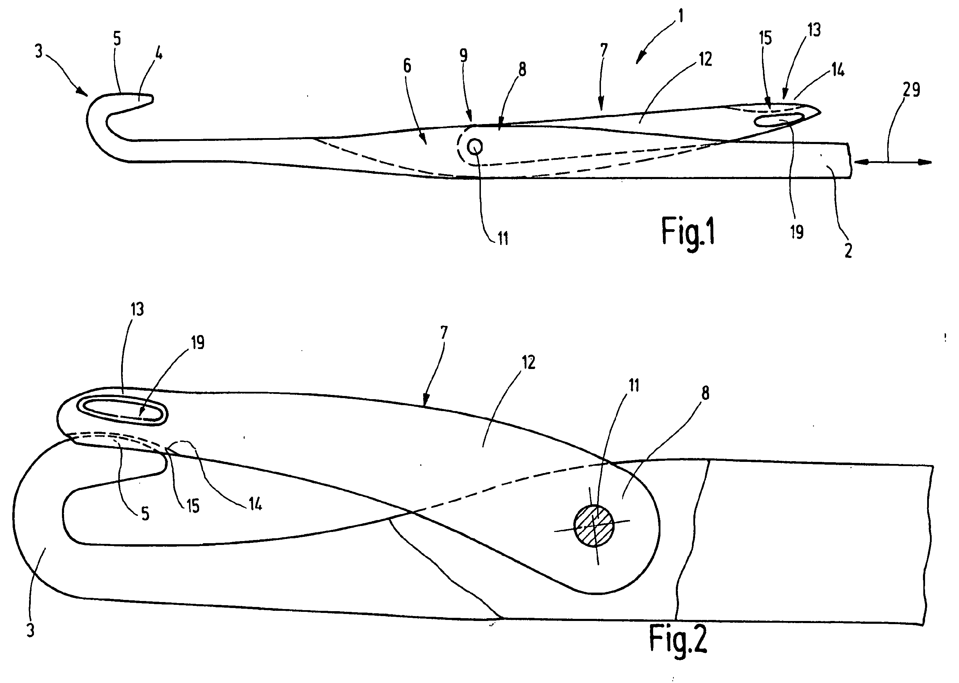

In Figur 1 ist eine Zungennadel 1 veranschaulicht, die einen Nadelkörper 2 mit einem endseitig daran ausgebildeten Haken 3 aufweist. Der Haken 3 ist mit einer Spitze 4 versehen, die an ihrer Oberseite 5 gerundet sein kann.

In nicht zu großem Abstand von dem Haken 3 ist in dem Nadelkörper 2 ein Zungenschlitz 6 vorgesehen, in den eine Zunge 7 mit einem Ende 8 hineinragt. Die Zunge ist in dem Zungenschlitz 6 an einer Lagereinrichtung 9 gehalten und schwenkbar gelagert. Die Lagereinrichtung 9 wird vorzugsweise und z.B. durch einen den Zungenschlitz 6 quer durchgreifenden einstückigen oder mehrteiligen Zapfen 11 gebildet. Um diesen Zapfen 11 ist die Zunge 7 aus der in Figur 1 veranschaulichten Rückenlage in die in Figur 2 veranschaulichte Schließlage schwenkbar.

Die Zunge weist einen schmalen, vorzugsweise parallelflankig begrenzten, Schaft 12 auf, dessen Breite geringfügig geringer ist als die des Zungenschlitzes 6. Die Länge der Zunge 7 ist so bemessen, dass sie mit ihrem Ende 13 die Oberseite 5 des Hakens 3 erreichen kann. Das Ende 13 ist dabei an der dem Haken 3 zugewandten Seite mit einer Formfläche 14 versehen, die in dem Ausführungsbeispiel gemäß Figur 1 und 2 eine Mulde 15 zur Aufnahme wenigstens eines Abschnitts des Hakens 3 bildet. Die Mulde 15 kann dabei, wie aus Figur 2 hervorgeht, an die Oberseite 5 des Hakens 3 angepasst sein.

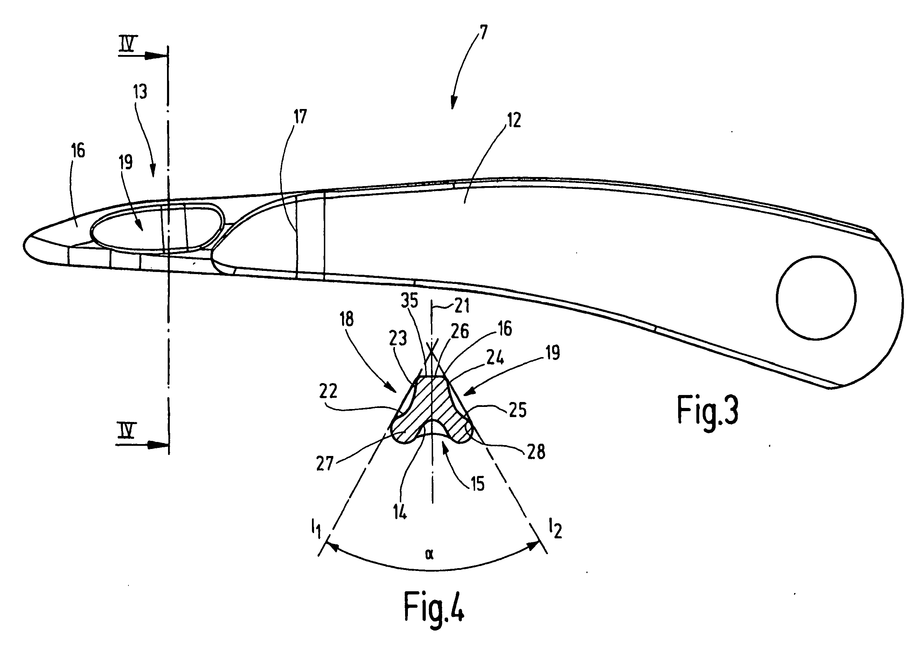

Die Ausbildung des Endes 13 der Zunge 7 geht im Weiteren aus den Figuren 3 und 4 hervor. Das Ende 13 weist eine Seiten- und Rückenfläche 16 auf, die die Rückseite eines endseitig an der Zunge 7 ausgebildeten Löffels bildet. Dieser Löffel markiert das Ende 13 der Zunge 7. Seine Breite übersteigt die Breite des im Wesentlichen parallelflankigen Schafts 12. Der Übergang zwischen dem Schaft 12 und dem Ende 13 liegt etwa bei einer Linie 17. Bei dieser beginnt die senkrecht zu den Seitenflächen des Schafts 12 gemessene Dicke der Zunge 7 zu deren Ende 13 hin sich zu ändern, zunächst zunehmend, im weiteren Verlauf wieder abnehmend.

In diesem Bereich der Zunge 7, d.h. im Bereich des Endes 13, ist zumindest eine Vertiefung ausgebildet. In dem vorliegenden Ausführungsbeispiel ist das Ende 13 mit zwei Vertiefungen 18, 19 versehen, die an den eher seitlichen Abschnitten der Seiten- und Rückenfläche 16 angeordnet sind. Sie sind länglich etwa eiförmig ausgebildet und erstrecken sich ungefähr parallel zu der von der Zunge 7 festgelegten Längsrichtung. Werden die Übergangspunkte zur Seitenfläche 16 der Vertiefungen 18, 19 untereinander verbunden (siehe Querschnitt gemäß Figur 4, Linie 11, Linie 12) so schließen die Verbindungslinien 11, 12 miteinander einen rechten oder einen spitzen Winkel α ein. Die Vertiefungen 18, 19 sind symmetrisch zu einer Längs-Mittelebene 21 angeordnet, auf der die von der Lagereinrichtung 9 definierte Drehachse der Zunge 7 senkrecht steht. Die Vertiefungen 18, 19 können als kantenfreie Mulden ausgebildet sein. Ihre randständigen Flanken können 22, 23 bzw. 24, 25 paarweise miteinander jeweils einen stumpfen Winkel von z.B. 120° einschließen. Die Formfläche 14 und die Mulden 18, 19 begrenzen somit einen dreischenkligen Querschnitt, der als symmetrisch zu der Längs-Mittelebene 21 angesehen werden kann. Er weist an seiner dem Haken 3 abgewandten Oberseite zwischen den Flanken 23, 24 eine vorzugsweise parallelflankige Rippe 26 auf. Ebenso können zwischen den Flanken 22, 25 und der Formfläche 14 verbleibende Abschnitte als Rippen 27, 28 angesehen werden. Dieser Querschnitt erweist sich als besonders biegesteif.

Die insoweit beschriebene Zungennadel 1 arbeitet wie folgt:

In Betrieb wird die Zungennadel 1 gemäß ihrer in Figur 1 durch einen Pfeil 29 bezeichneten Längsrichtung hin- und hergehend bewegt. Die Zunge pendelt dabei fortwährend zwischen ihrer Rücklage (Figur 1) und ihrer Schließlage (Figur 2). In der Schließlage liegt die Formfläche 14 teilweise an dem Haken 3 an. In Rücklage ist der Haken 3 hingegen freigegeben. Beim Hin- und Herpendeln gewinnt die Zunge 7 jeweils an kinetischer Energie, die beim Aufschlagen in der Rückenlage oder beim Anschlagen an dem Haken 3 zu einer Stoßbelastung des Hakens 3 und der Zunge 7 führt. Die Vertiefungen 18, 19 reduzieren dabei im Vergleich zu einer Zunge 7 gleicher Form, jedoch ohne solche Vertiefungen, die umzusetzende kinetische Energie ansehnlich. Selbst relativ flache Vertiefungen 18, 19 können die Energie bei gleicher Arbeitsgeschwindigkeit um 5% bis 10% reduzieren. Es ergibt sich dadurch eine geringere Belastung an der Oberseite 5 des Hakens 3 sowie an der Formfläche 14. Des Weiteren ist der auf die Zunge 7 einwirkende Stoß gemildert, was zu einer signifikant reduzierten Anzahl von Brüchen im Bereich des Schafts 12 der Zunge 7 führt. Brüche im Bereich des Endes 13 der Zunge 7 werden ebenfalls reduziert.

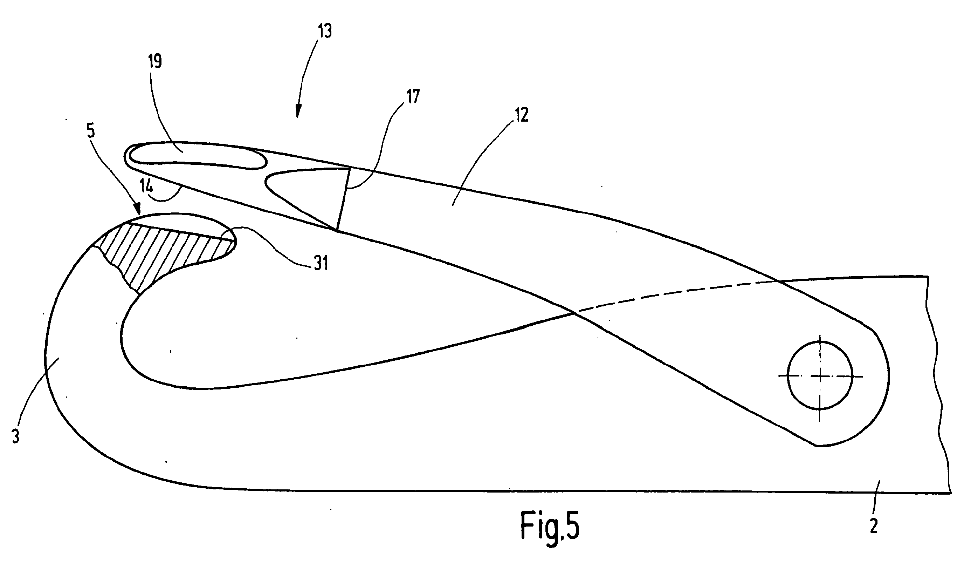

Die Figuren 5 bis 8 veranschaulichen eine abgewandelte Ausführungsform der Zungennadel 1 im Ausschnitt und im Detail. Soweit Übereinstimmung mit der vorigen Beschreibung besteht, wird unter Zugrundelegung gleicher Bezugszeichen auf diese verwiesen. Abweichend von-der vorstehenden Beschreibung gilt folgendes:

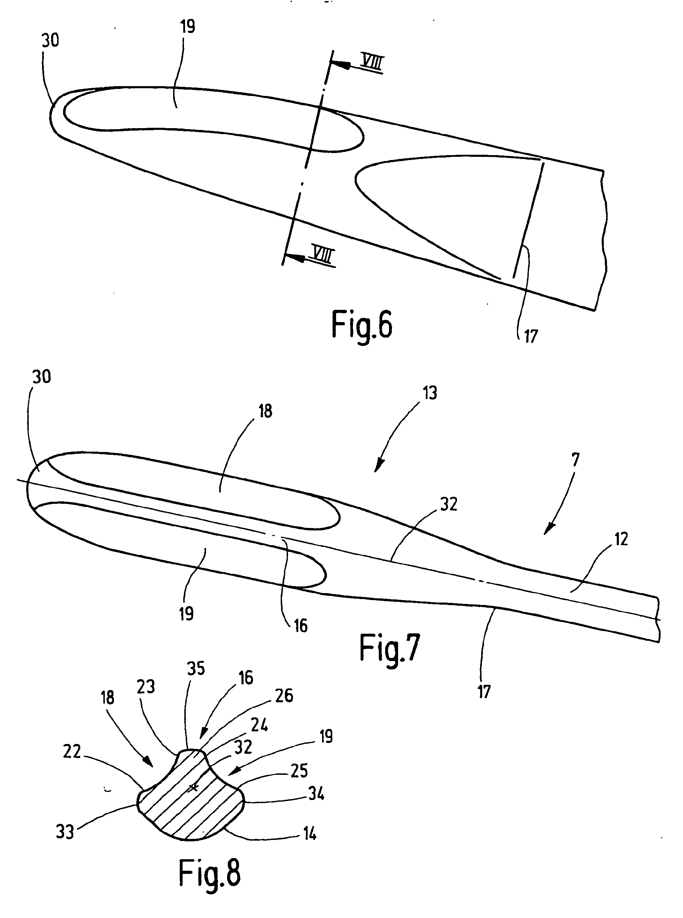

Der Haken 3 ist an seiner Oberseite 5 mit einer so genannten Zasche 31 versehen, die als in Nadellängsrichtung oder gegen diese geneigt verlaufende Mulde oder rinnenartige Ausnehmung angesehen werden kann. Die an dem Ende 13 ausgebildete Formfläche 14 ist der Form der Zasche 31 angepasst. Wie Figur 6 und insbesondere Figur 8 veranschaulicht, kann die Formfläche etwa zylindrisch um die Zungenlängsachse 32 (Figur 7) gewölbt sein. Die Formfläche 14 ist hier konvex gewölbt während die Formfläche 14 bei dem Ausführungsbeispiel nach Figur 1 bis 3 konkav gewölbt ist.

Wie bei dem vorstehend beschriebenen Ausführungsbeispiel ist das Ende 13, das gegenüber dem Schaft 12 verbreitert ausgebildet ist, mit Vertiefungen 18, 19 in Form von Mulden versehen. Diese erstrecken sich möglichst bis zu der Spitze 30 der Zunge 7. Sie beginnen jeweils an den seitlichen Flanken 33, 34 des Zungenendes und erstrecken sich konkav gewölbt bis zu seiner Oberseite 35. Im einfachsten Fall folgen die Vertiefungen 18, 19 einem Kreisprofil oder Kreisbogen. Es können jedoch auch andere Vertiefungsformen zur Anwendung kommen. Bevorzugt werden hier glatte, d.h. knick- und kantenfreie Formen angewendet. Außerdem ist der Umriss der Vertiefungen 18, 19 eckenfrei und die die Vertiefungen 18, 19 begrenzende Kante ist gerundet. Damit werden Verletzungen von über die Zunge 7 gleitenden Maschen sowie sonstige negative Funktionseinflüsse vermieden.

Der gesamte Endbereich 13 der Zunge 7 der erfindungsgemäßen Zungennadel 1 kann an beliebiger Stelle eine Vertiefung 18, 19 aufweisen. So kann beispielsweise diese Vertiefung 18, 19 in Verlängerung der Ausnehmung 14 unterhalb der Zungenspitze 30 angeordnet sein.

Die erfindungsgemäße Zungennadel 1 weist eine Zunge 7 auf, die an ihrem freien Ende an ihrer dem Haken 3 abgewandten Seite mit ein oder mehreren Ausnehmungen 18, 19 versehen ist. Die Funktion dieser Ausnehmungen besteht in einer Verminderung des Massenträgheitsmoments der Zunge 7, was zu einer erhöhten Zungen- und Nadellebensdauer führt. Zwischen den Ausnehmungen 18, 19 verbleibt eine Rippe 26, deren Oberseite 35 wie eine Gleitkufe für überzuleitende Maschen wirkt. Die Vertiefungen 18, 19 sind vorzugsweise längliche Mulden. Es können jedoch ersatzweise auch entsprechende Durchbrüche versehen sein.

### Bezugszeichenliste:

- 1: Zungennadel
- 2: Nadelkörper
- 3: Haken
- 4: Spitze
- 5: Oberseite
- 6: Zungenschlitz
- 7: Zunge
- 8: Ende
- 9: Lagereinrichtung
- 11: Zapfen
- 12: Schaft
- 13: Ende
- 14: Formfläche
- 15: Mulde
- 16: Seiten- und Rückenfläche
- 17: Linie
- 18, 19: Vertiefungen
- 21: Längs-Mittelebene
- 22, 23, 24, 25: Flanken
- 26, 27, 28: Rippen
- 29: Pfeil
- 30: Zungenspitze
- 31: Zasche
- 32: Zungenlängsachse
- 33, 34,: Flanken
- 35: Oberseite

## Patentansprüche

1. Zungennadel (1) für maschenbildende Textilmaschine, insbesondere Strickmaschine,
mit einem Nadelkörper (2), einen Haken (3) und eine in der Nähe desselben angeordnete Lagereinrichtung (9) aufweist,
mit einer Zunge (7), die mit einem Ende (8) an der Lagereinrichtung (9) gehalten und schwenkbar gelagert ist und deren anderes Ende (13) eine dem Haken (3) zugeordnete Formfläche (14) aufweist,
**dadurch gekennzeichnet, daß** die Zunge (7) an ihrem anderen Ende (13) wenigstens eine außerhalb der Formfläche (14) angeordnete Vertiefung (18, 19) aufweist.

2. Zungennadel nach Anspruch 1, **dadurch gekennzeichnet, dass** die Vertiefung (18, 19) an einer hakenabgewandten Seite der Zunge (7) angeordnet ist.

3. Zungennadel nach Anspruch 1, **dadurch gekennzeichnet, dass** die Vertiefung (18, 19) als Mulde ausgebildet ist.

4. Zungennadel nach Anspruch 1, **dadurch gekennzeichnet, dass** die Vertiefung (18, 19) länglich ausgebildet ist.

5. Zungennadel nach Anspruch 4, **dadurch gekennzeichnet, dass** die Vertiefung (18, 19) längs zu der Zunge (7) angeordnet ist.

6. Zungennadel nach Anspruch 1, **dadurch gekennzeichnet, dass** an der Zunge (7) zwei Vertiefungen (18, 19) ausgebildet sind.

7. Zungennadel nach Anspruch 6, **dadurch gekennzeichnet, dass** die Vertiefungen (18, 19) in Längsrichtung spitzwinklig oder parallel zueinander ausgerichtet sind.

8. Zungennadel nach Anspruch 6, **dadurch gekennzeichnet, dass** die Vertiefungen (18, 19) im Querschnitt mit ihren Rändern Linien 11, 12 festlegen, die miteinander einen Rechten oder einen spitzen Winkel α einschließen.

9. Zungennadel nach Anspruch 1, **dadurch gekennzeichnet, dass** die Zunge (7) einen Löffel aufweist, an dessen Seiten- und Rückenfläche (16) die zumindest eine Vertiefung (18, 19) ausgebildet ist.

10. Zungennadel nach Anspruch 8, **dadurch gekennzeichnet, dass** die Formfläche (14) eine dem Haken (3) zugewandte Ausnehmung ist.

11. Zungennadel nach Anspruch 1, **dadurch gekennzeichnet, dass** der Haken (3) mit einer Zasche (31) zur Aufnahme wenigstens eines Abschnitts der Formfläche (14) versehen ist.

## Claims

1. A latch needle (1) for a loop-forming textile machine, in particular a knitting machine,
having a needle body (2), a hook (3), and a bearing device (9) disposed in the vicinity of the hook,
having a latch (7), which is held and pivotably supported on the bearing device (9) by one end (8), and whose other end (13) has a shaped face (14) associated with the hook (3),
wherein the latch (7), on its other end (13), has at least one indentation (18, 19) disposed outside the shaped face (14).

2. The latch needle of claim 1, **characterized in that** the indentation (18, 19) is disposed on a side of the latch (7) facing away from the hook.

3. The latch needle of claim 1, **characterized in that** the indentation (18, 19) is embodied as a depression.

4. The latch needle of claim 1, **characterized in that** the indentation (18, 19) is embodied in elongated form.

5. The latch needle of claim 4, **characterized in that** the indentation (18, 19) is disposed longitudinally to the latch (7).

6. The latch needle of claim 1, **characterized in that** two indentations (18, 19) are embodied on the latch (7).

7. The latch needle of claim 6, **characterized in that** the indentations (18, 19) are oriented at an acute angle or parallel to one another in the longitudinal direction.

8. The latch needle of claim 6, **characterized in that** the indentations (18, 19) in cross section, with their edges, define lines (l₁, l₂), which form a right or acute angle α with one another.

9. The latch needle of claim 1, **characterized in that** the latch (7) has a spoon on whose side and back face (16) the at least one indentation (18, 19) is embodied.

10. The latch needle of claim 8, **characterized in that** the shaped face (14) is a recess oriented toward the hook (3).

11. The latch needle of claim 1, **characterized in that** the hook (3) is provided with a noucat (31) for receiving at least a portion of the shaped face (14).

## Revendications

1. Aiguille à clapet (1) pour une machine textile formant des mailles, en particulier un métier à tricoter, comprenant
un corps d'aiguille (2), un crochet (3) et un moyen d'articulation (9) disposé à proximité de celui-ci,
un clapet (7) qui est tenu par une extrémité (8) sur le moyen d'articulation (9) et est monté pivotant et dont l'autre extrémité (13) présente une surface profilée (14) associée au crochet (3),
**caractérisée en ce que** le clapet (7) présente à son autre extrémité (13) au moins une dépression (18, 19) aménagée à l'extérieur de la surface profilée (14).

2. Aiguille à clapet selon la revendication 1, **caractérisée en ce que** la dépression (18, 19) est aménagée sur une face du clapet (7) qui est éloignée du crochet.

3. Aiguille à clapet selon la revendication 1, **caractérisée en ce que** la dépression (18, 19) est conformée en creux.

4. Aiguille à clapet selon la revendication 1, **caractérisée en ce que** la dépression (18, 19) a une forme allongée.

5. Aiguille à clapet selon la revendication 4, **caractérisée en ce que** la dépression (18, 19) est disposée dans le sens longitudinal du clapet (7).

6. Aiguille à clapet selon la revendication 4, **caractérisée en ce que** deux dépressions (18, 19) sont aménagées sur le clapet (7).

7. Aiguille à clapet selon la revendication 6, **caractérisée en ce que** les dépressions (18, 19) sont orientées dans la direction longitudinale en formant un angle aigu ou en étant parallèles l'une à l'autre.

8. Aiguille à clapet selon la revendication 6, **caractérisée en ce que** les dépressions (18, 19) définissent en section transversale avec leurs bords des lignes (11, 12) qui forment entre elles un angle α droit ou aigu.

9. Aiguille à clapet selon la revendication 1, **caractérisée en ce que** le clapet (7) présente une partie en forme de cuillère, sur la face latérale et dorsale (16) de laquelle est aménagée la dépression (18, 19), au nombre d'au moins une.

10. Aiguille à clapet selon la revendication 8, **caractérisée en ce que** la surface profilée (14) est un évidement tourné vers le crochet (3).

11. Aiguille à clapet selon la revendication 1, **caractérisée en ce que** le crochet (3) est muni d'une portion conjuguée évidée (31) pour recevoir au moins une partie de la surface profilée (14).
